# EUROPEAN PATENT SPECIFICATION

(11) **EP 3 405 373 B1**
(45) Date of publication and mention of the grant of the patent: **24.06.2020**
(21) Application number: 16784317.6
(22) Date of filing: 30.09.2016
(51) Int. Cl.: B60T 17/04, F16L 37/256

(54) **INTERLOCKING GLADHANDS**
INEINANDERGREIFENDE KUPPLUNGSKÖPFE
TÊTES D'ACCOUPLEMENT À INTERVERROUILLAGE

(30) Priority: 21.01.2016 WO PCT/US2016/014267; 21.01.2016 US 201615003104
(43) Date of publication of application: 28.11.2018
(73) Proprietor: New York Air Brake LLC, Watertown, NY 13601 (US)
(72) Inventor: AIKEN, Jeffrey, Watertown NY 13601 (US)
(74) Representative: Strehl Schübel-Hopf & Partner
(86) International application number: PCT/US2016/054762
(87) International publication number: WO 2017/127139

(56) References cited:
- FR-A- 1 456 861
- US-A- 1 797 423
- US-A- 2 535 740
- US-A- 3 241 865

## Description

### 1. FIELD OF THE INVENTION

The present invention relates to air brake hose connectors and, more particularly, to a connector having a mechanical interlock to prevent inadvertent decoupling.

### 2. DESCRIPTION OF THE RELATED ART

Air brake hose couplers, typically referred to as gladhand connectors, have two interlocking members fitted to the hoses that supply pressurized air from a locomotive to the railway air brakes of the railroad cars of a train and then coupled together to join the hoses together. Conventional gladhands used throughout in the rail industry do not include any mechanism that locks the gladhands together when in the coupled position. Instead, the prevailing gladhand design uses the compression of a rubber gasket between the faces of the two gladhands as the sole means to hold a rib in a groove, thus holding the gladhands together. This approach has proven to be unreliable in the field, however, as it is easily disconnected by involuntary forces, such as hose vibration. While the art includes locking mechanisms for gladhands, these approaches have not been adopted in the field because they require that the gladhand be unlocked through additional steps or manipulation that are not practical for current methods of rail car separation or compliant with the applicable industry regulations and standards, such as those promulgated by the Association of American Railroads (AAR). Thus, there is a need in the art for a gladhand design that mitigates the risk of unintended hose separation but allows for disconnection without additional steps or structure.

The document US 2 535 740 A discloses a gladhand coupling according to the preamble of claim 1. Further related art is disclosed in the documents FR 1 456 861 A, 25 US 3 241 865 A and US 1 797 423 A.

### BRIEF SUMMARY OF THE INVENTION

The present invention comprises a gladhand coupling according to claim 1. The gladhand coupling may further comprise second gladhand coupling half which may be connected to the first gladhand coupling half. The first coupling half and the second coupling half are movable between a disconnected position, wherein the first and second ramped pads are misaligned, respectively, and a connected position, wherein the first and second ramped pads are aligned, respectively. The first coupling half and second coupling half are oriented at other than 180 degrees to each other when in the connected position. The first coupling half and the second coupling half are also movable into a released position where the narrow pad of one gladhand coupling half can pass through the slot of the other gladhand coupling half and vice versa. The first coupling half and second coupling half are oriented at about 180 degrees in the released position.

### BRIEF DESCRIPTION OF THE SEVERAL VIEWS OF THE DRAWING(S)

The present invention will be more fully understood and appreciated by reading the following Detailed Description in conjunction with the accompanying drawings, in which:
FIG. 1 is a perspective view of a gladhand coupling;
FIG. 2 is a perspective view of a gladhand coupling half;
FIG. 3 is another perspective view of a gladhand coupling half;
FIG. 4 is front view of a gladhand coupling half;
FIG. 5 is an isometric view of a gladhand coupling half;
FIG. 6 is a perspective view of a gladhand coupling half; and
FIG. 7 is a perspective view of a gladhand coupling half;
FIG. 8 is a front view of an embodiment of a gladhand coupling half according to the present invention; and

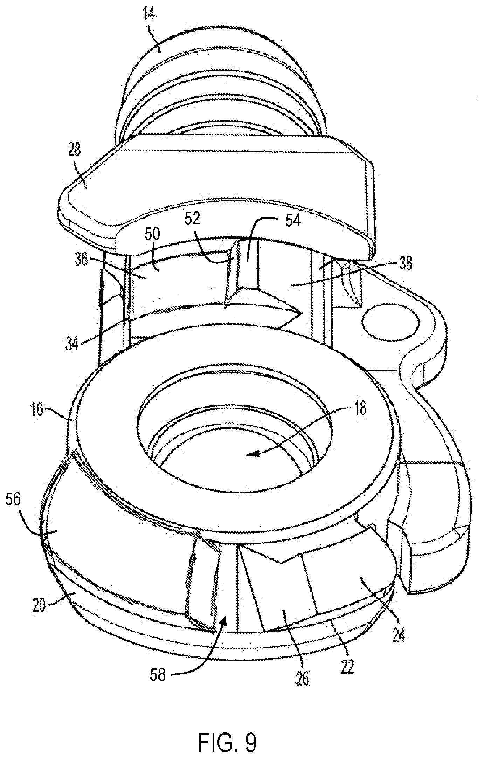

FIG. 9 is a perspective view of another embodiment of a gladhand coupling half according to the present invention.

### DETAILED DESCRIPTION OF THE INVENTION

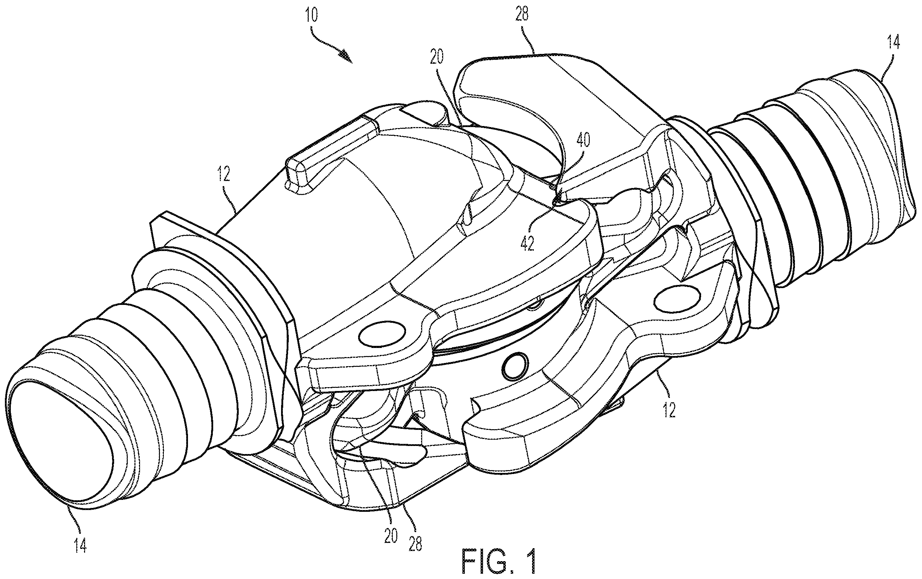

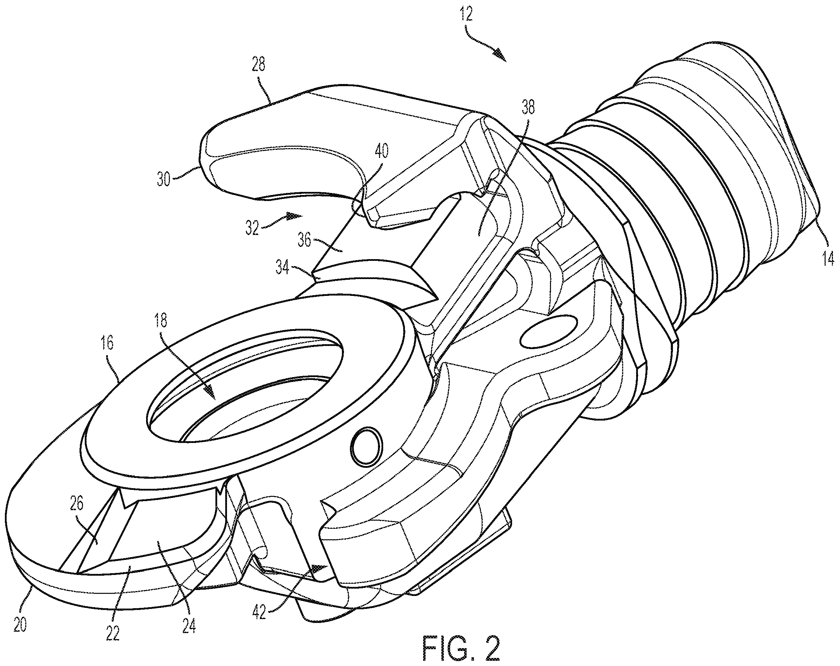

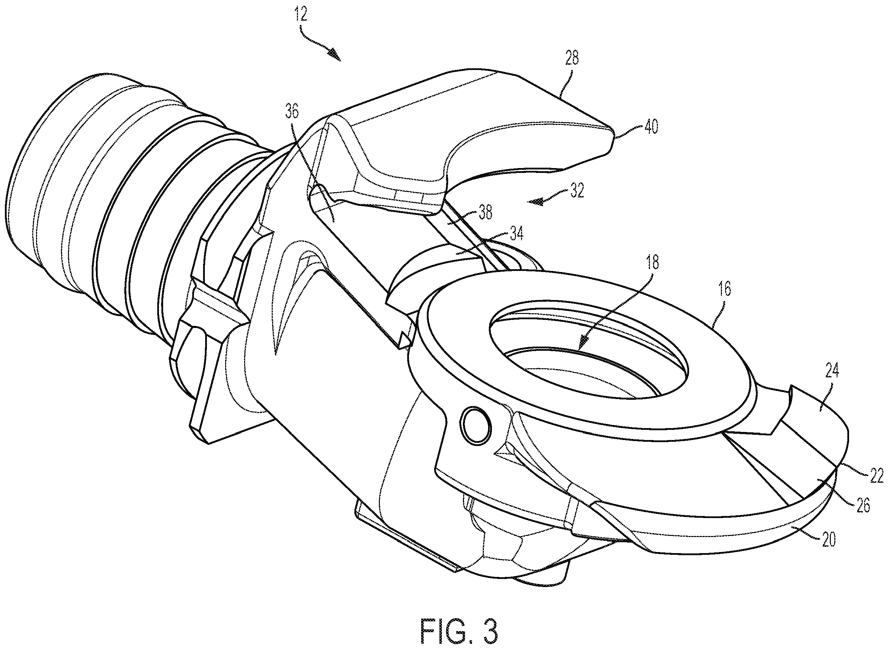

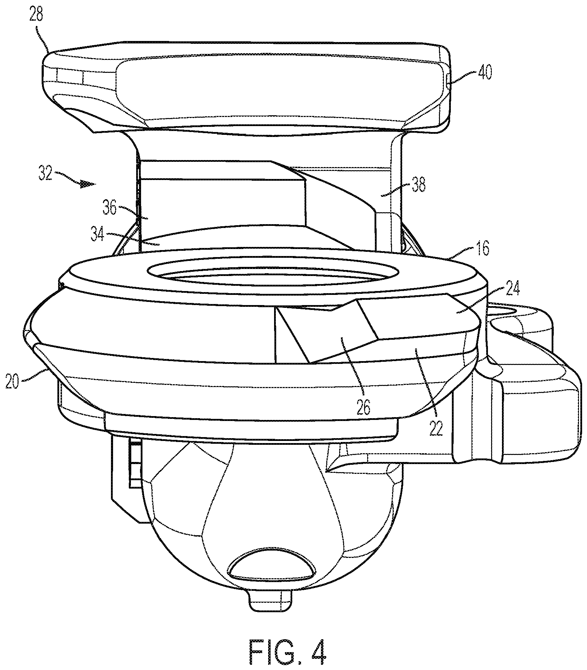

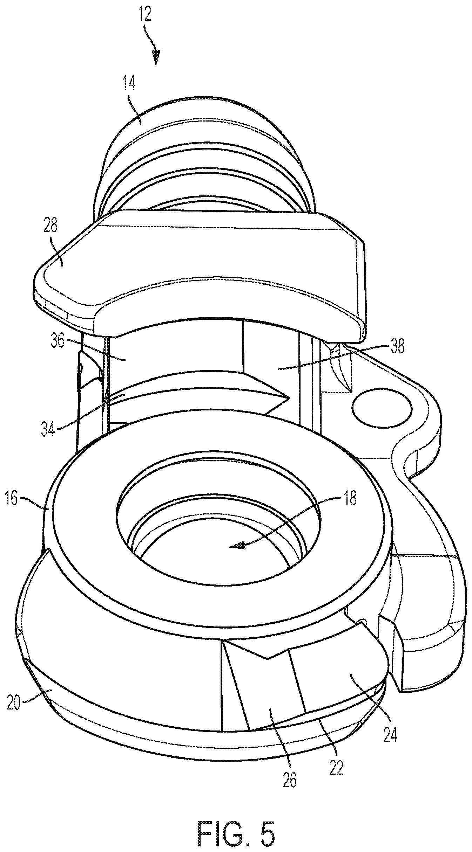

Referring now to the drawings, wherein like reference numerals refer to like parts throughout, there is seen in FIGS. 1 through 5, a gladhand coupling 10 related to the invention comprising a pair of coupling halves 12 that may be rotatable coupled together. Each coupling half 12 includes an air hose shank 14 for the connecting an air hose (not shown) to coupling half 12. Referring to FIGS. 2 and 3, coupling half 12 is hollow and includes face 16 extending along a plane and having an opening 18 formed therethrough to define an air passage that is in fluid communication with the interior of connector 14 and thus the internal diameter of an air hose attached thereto. As with conventional gladhands, coupling 10 is connected and disconnected by rotating one coupling half 12 relative to another coupling half 12, thereby connecting and disconnecting the air hoses coupled to the shanks 14 of each coupling half 12. All of the elements of gladhand coupling 10 may be formed via metal casting when manufacturing coupling 10.

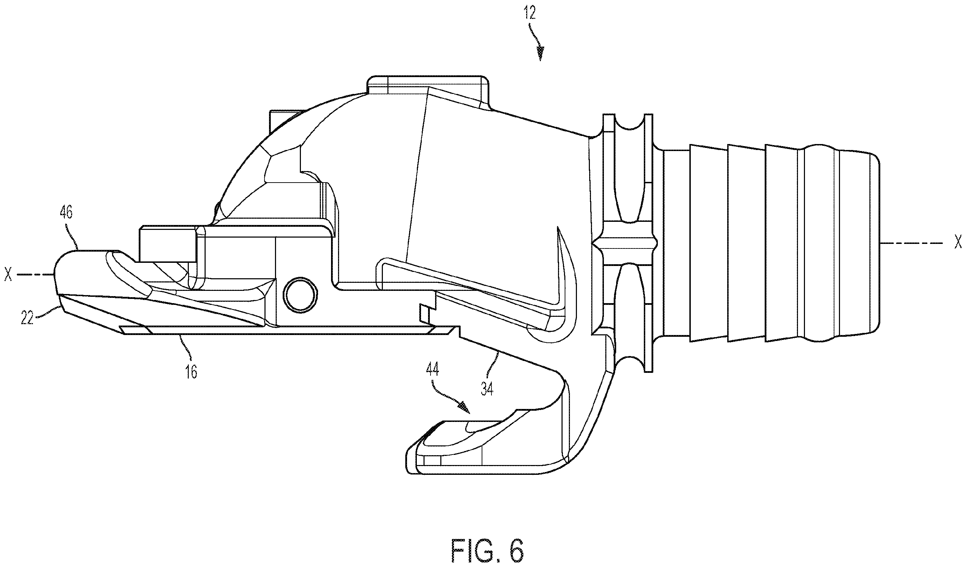

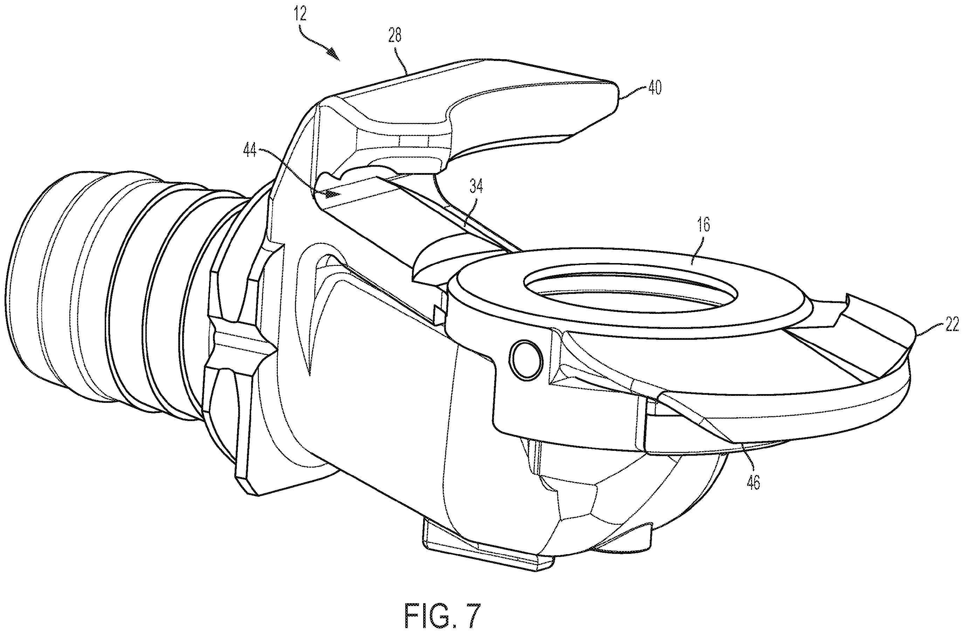

Referring to FIGS. 2 through 5, each coupling half 12 includes a locking lug 20 extending outwardly from the periphery of face 16 along a plane parallel to axis X-X. Lug 20 has a first ramped pad 22 defined by a conical portion 24, i.e., the surface of conical portion 24 extends conically relative to face 16, and a ramped surface 26 leading to conical portion 24 from the remaining surface of lug 20 that is conical relative to face 16. Coupling half 12 further includes an L-shaped annular flange 28 positioned approximately oppositely about face 16 of coupling half 12 from ramped pad 22 of lug 20. Flange 28 includes a pair of legs 30 that extends over face 16 to define a channel 32 that is adapted to receive a lug 20 of another coupling half 12. The lower portion of flange 28 includes a second ramped pad 34 having a conical portion 36 and a ramped portion 38 leading to conical portion 36 that correspond in positioning and conical angle to conical portion 24 and a ramped surface 26 of lug 20. Referring to FIGS. 6 and 7, conical portion 24 and conical portion 36 extend about face 16 of coupling half 12 at matching angles relative to longitudinal axis X-X of coupling half 12.

Each coupling half 12 further includes a pointed leg 40 on flange 28 and a notch 42 positioned at one end of lug 20 so that when two coupling halves 12 are connected together, leg 40 of flange is received in notch 42, thereby forming a stop that prevents rotations of coupling halves 12 past the locked position of gladhand coupling 10 seen in FIG. 1, where each coupling half 12 is positioned at less than 180 degrees relative to the other coupling half 12. Rotation of coupling halves 12 toward a 180 degree offset position allows coupling 10 to unlock as ramped pads 22 and 34 are no longer aligned opposite each other thereby allowing the resilient gasket to compress and coupling 10 to uncouple by pulling ridge 46 out of groove 44 when rail cars are separated normally.

As further seen in FIGS. 6 and 7, each coupling half 12 also includes an arcuate groove 44 formed in the interior surface of flange 28 and a corresponding arcuate ridge 46 formed on the exterior surface of lug 20. Ridge 46 and groove 44 are dimensioned and positioned so that ridge 46 of one coupling half 12 will slide into groove 44 of a mating coupling half 12 and continue sliding until the legs 40 of each half 12 engage the corresponding notches 42 of the other halves 12 as two coupling halves 12 are rotated toward the locked position. Ridge 46 is held in groove 44 by the opposing forces from the resilient gaskets seated in bore 18.

Coupling halves 12 are joined to form gladhand coupling 10 by positioning the respective faces 16 of two coupling halves 12 against each other so that the longitudinal axes are misaligned, and then rotating one coupling half 12 relative to the other coupling half 12 past a 180 degree orientation until lug 20 of one coupling half 12 slides completely into channel 32 of flange 28 of the other coupling half 12, ridge 46 slides fully into groove 44, and pointed leg engages notch 42. As halves 12 are rotated toward the locked position of FIG. 1, ridge 46 and groove 44 urge halves 12 together, thereby compressing any sealing gasket (not shown) that is positioned between the two halves 12. Because sealing gaskets are resilient, the biasing forces produced by the sealing gasket will help maintain gladhand coupling 10 in the locked position by keeping ridge 44 seated in groove 46.

Gladhand coupling 10 prevents inadvertent separation of halves 12 as follows. As coupling halves 12 are rotated into the locked position, sloped surfaces 26 and 38 guide surfaces 24 and 36 into opposing alignment despite any dimensional tolerances of the two coupling halves 12 and sealing gasket. Once gladhand coupling 10 is moved into the fully locked position of FIG. 1, surface 24 of one half 12 is directly opposite surface 36 of the opposing half 12 and spaced apart therefrom by an extremely minimal distance, such as between 0 mm and 1,5 mm (between 0.00 inches and 0.06 inches) thereby preventing coupling halves 12 from being compressed laterally enough that coupling halves 12 have the freedom to uncouple unintentionally. Due to the limited distance between these two surfaces, any inadvertent lateral forces applied to coupling 12 will be unable to compress the gasket positioned between the two halves 12 sufficiently to loosen coupling 10 such that ridge 44 of locking lug 20 of each half 12 is free to slide out of groove 44 of flange 28 of the other half 12. Rotational movement of coupling halves 12 will move flat surfaces 24 and 36 out of alignment so that coupling halves 12 can compress sealing gasket sufficiently to allow each ridge 44 of each locking lug 20 to slide out of each groove 44 of each flange 28. Alternatively, ramped pads 22 and 34 may be dimensioned and positioned to become mechanically coupled when coupling halves 12 are rotated together into the locked position of FIG. 1. This embodiment requires machining of surfaces 24 and 36 to be shallow ramps such that the highpoint created by the intersection of ramps 26 and 24, and the highpoint created by the intersection of ramps 36 and 38, need to be forced past each other to reach the fully locked position. The resulting mechanical interference between these two high points would help retain coupling 10 in the fully engaged position until they were forcefully pulled apart by the train in an intentional uncoupling event.

The intentional uncoupling of a gladhand coupling, including gladhand coupling 10, involves using the train to pull the brake hoses tight, which forces halves 12 to rotate toward 180 degree opposite alignment relative to each other. As halves 12 rotate, the opposing ramped pads 22 and 34 rotate out of alignment allowing the resilient gaskets to compress sufficiently to allow ridge 46 to be pulled out of groove 44 by the train car forces so that coupling halves 12 can separate. Gladhand coupling 10 thus remains free for normal disconnection of gladhand couplings by an intentional rotation of halves 12 relative to each other, such as during a rail yard pull-apart, but reduces the incidents of inadvertent disconnection when in locked position. As no additional latches or locking mechanisms need to be manipulated to unlock coupling halves 12, coupler 10 can be disconnected simply by rotating the two coupling halves 12 relative to each other as is the practice with conventional gladhands, or pulling them apart as described above, thereby providing for a secure mechanical interconnection without the need for complex locking structure that must be separately unlocked before gladhand coupling 10 can be open to disconnect air hoses connected thereto.

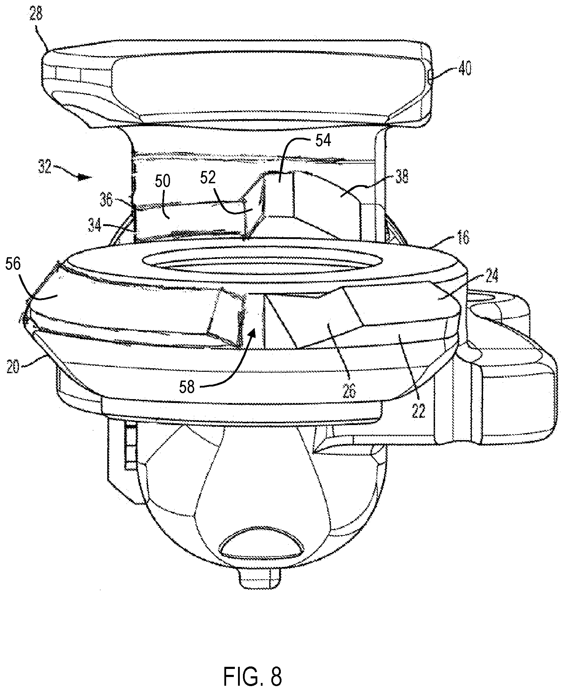

Referring to FIG. 8, in an embodiment of the gladhand coupling 10 according to the present invention, ramp 36 of ramped pad 34 may be shaped to define a first portion 50 that is substantially flat, a second portion 52 that slopes steeply upward, and narrow pad 54 that is substantially flat and proximate to descending ramp 38. A third ramped pad 56 is positioned oppositely about locking lug 20 and spaced apart from ramped surface 26 and conical portion 24 of ramp pad 22 to define a slot 58 therebetween. Slot 58 is positioned so that it aligns with narrow pad 54 when coupling halves 12 are positioned at approximately 180 degrees relative to each other. Accordingly, coupling halves 12 may be engaged by positioning at approximately 90 degrees relative to each other and rotated. Narrow pad 54 will interface with third ramped pad 56 to prevent inadvertent unlocking of coupling halves 12 should coupling halves 12 not be fully rotated past 180 degrees into the fully locked position. Narrow pad 54 will also, as explained above, cooperate with ramped pad 22 to prevent inadvertent uncoupling when coupling halves are rotated past 180 degrees into the full locked position. Due to the relative positioning of slot 58 to narrow pad 54, coupling halves 12 are free to uncouple when coupling halves 12 are rotated into the 180 degree orientation relative to each other, such as during an intentional uncoupling event. Thus, this embodiment of coupling 10 prevents inadvertent separation of coupling halves 12 in nearly all orientations after initial coupling other than the orientation where glandhands 10 are intended to and remain free to automatically uncouple when intentionally pulled apart in an uncoupling event.

## Claims

1. A gladhand coupling, comprising:
a first coupling half (12) having a face (16) with an opening (18) therethrough;
a locking lug (20) extending outwardly from the face (16) of said first coupling half (12) and having a first ramped pad (22) positioned at a predetermined location about the face (16) and a ridge (46) extending outwardly therefrom;
**characterized in that** the first coupling half (12) further comprises:
a flange (28) extending from the face (16) and having a second ramped pad (34) positioned oppositely about the face (16) from the first ramped pad (22), said second ramped pad (34) being shaped to define a narrow pad (54),
wherein said locking lug (20) further includes a third ramped pad (56) spaced apart from the first ramped pad (22) to define a slot (58) therebetween.

2. The coupling of claim 1, wherein the flange (28) includes a leg (40) defining a channel (32) above the second ramped pad (34).

3. The coupling of claim 2, wherein the channel (32) is dimensioned to receive a locking lug (20) of a second coupling half (12).

4. The coupling of claim 3, wherein the first ramped pad (22) comprises a conical portion (24) and a ramped portion (26).

5. The coupling of claim 4, wherein the second ramped pad (34) comprises a second conical portion (36) and a second ramped portion (38).

6. The coupling of claim 5, further comprising:
a second coupling half (12) having a second face (16) with a second opening (18) therethrough;
a second locking lug (20) extending outwardly from the second face (16) of said second coupling half (12) and having a first ramped pad (22) positioned at a predetermined location about the second face (16) and a second ridge extending therefrom;
a second flange (28) extending from the second face (16) and having a second ramped pad (34) positioned oppositely about the second face (16) from the first ramped pad (22), said second ramped pad (34) being shaped to define a narrow pad (54),second locking lug (20) further includes a third ramped pad (56) spaced apart from the first ramped pad (22) to define a second slot (58) therebetween that can accept the narrow pad (54) of the first coupling half (12).

7. The coupling of claim 6, wherein the first coupling half (12) and the second coupling half (12) are movable between a disconnected position, wherein the first and second ramped pads (22, 34) are misaligned, respectively, and a connected position, wherein the first and second ramped pads (22, 34) are aligned, respectively.

8. The coupling of claim 7, wherein the first coupling half (12) and second coupling half (12) are oriented at other than 180 degrees to each other when in the connected position.

9. The coupling of claim 8, wherein the first coupling half (12) and the second coupling half (12) are movable into a released position where the narrow pad (54) of the second coupling half (12) can pass through the slot (58) of the first coupling half (12) and the narrow pad (54) of the first coupling half (12) can pass through the second slot (58) of the second coupling half (12).

10. The coupling of claim 9, wherein the first coupling half (12) and second coupling half (12) are oriented at about 180 degrees in the released position.

11. The coupling of claim 8, wherein the first and second ramped pads (22, 34) of different coupling halves (12) are spaced apart less than 1,5 mm (0.06 inches) when the coupling is in the connected position.

## Patentansprüche

1. Kupplung mit ineinandergreifenden Kupplungshälften, umfassend:
eine erste Kupplungshälfte (12), die eine Fläche (16) mit einer sie durchdringenden Öffnung (18) aufweist;
eine Verriegelungsnase (20), die sich von der Fläche (16) der ersten Kupplungshälfte (12) nach außen erstreckt und ein erstes abgeschrägtes Auflager (22), das an einer vorgegebenen Stelle um die Fläche (16) herum positioniert ist, und eine sich davon nach außen erstreckende Rippe (46) aufweist;
**dadurch gekennzeichnet, dass** die erste Kupplungshälfte (12) ferner umfasst:
einen Flansch (28), der von der Fläche (16) ausgeht und ein zweites abgeschrägtes Auflager (34) aufweist, das bezogen auf die Fläche (16) dem ersten abgeschrägten Auflager (22) gegenüber liegend angeordnet ist, wobei das zweite abgeschrägte Auflager (34) so geformt ist, dass es ein schmales Auflager (54) bildet,
wobei die Verriegelungsnase (20) ferner ein drittes abgeschrägtes Auflager (56) aufweist, das von dem ersten abgeschrägten Auflager (22) beabstandet ist, um einen Schlitz (58) dazwischen zu bilden.

2. Kupplung nach Anspruch 1, wobei der Flansch (28) einen Schenkel (40) aufweist, der einen Kanal (32) über dem zweiten abgeschrägten Auflager (34) definiert.

3. Kupplung nach Anspruch 2, wobei der Kanal (32) so dimensioniert ist, dass er eine Verriegelungsnase (20) einer zweiten Kupplungshälfte (12) aufnimmt.

4. Kupplung nach Anspruch 3, wobei das erste abgeschrägte Auflager (22) einen konischen Abschnitt (24) und einen abgeschrägten Abschnitt (26) aufweist.

5. Kupplung nach Anspruch 4, wobei das zweite abgeschrägte Auflager (34) einen zweiten konischen Abschnitt (36) und einen zweiten abgeschrägten Abschnitt (38) aufweist.

6. Kupplung nach Anspruch 5, die ferner umfassend:
eine zweite Kupplungshälfte (12), die eine zweite Fläche (16) mit einer zweiten, sie durchdringenden Öffnung (18) aufweist;
eine zweite Verriegelungsnase (20), die sich an die zweite Fläche (16) der zweiten Kupplungshälfte (12) anschließt und ein erstes abgeschrägtes Auflager (22), das an einer vorbestimmten Stelle um die zweite Fläche (16) herum positioniert ist, und eine zweite, davon ausgehende Rippe aufweist;
einen zweiten Flansch (28), der sich an die zweite Fläche (16) anschließt und ein zweites abgeschrägtes Auflager (34) aufweist, das bezogen auf die zweite Fläche (16) dem ersten abgeschrägten Auflager (22) gegenüber liegend angeordnet ist, wobei das zweite abgeschrägte Auflager (34) so geformt ist, dass es ein schmales Auflager (54) bildet und einen zweiten Verriegelungsvorsprung (20), der ferner ein drittes abgeschrägtes Auflager (56) umfasst, das von dem ersten abgeschrägten Auflager (22) beabstandet ist, so dass ein zweiter Schlitz (58) dazwischen definiert wird, der das schmale Auflager (54) der ersten Kupplungshälfte (12) aufnehmen kann.

7. Kupplung nach Anspruch 6, wobei die erste Kupplungshälfte (12) und die zweite Kupplungshälfte (12) zwischen einer getrennten Position, in der die ersten und zweiten abgeschrägten Auflager (22, 34) jeweils fehlorientiert sind, und einer verbundenen Position, in der die ersten und zweiten abgeschrägten Auflager (22, 34) jeweils zueinander ausgerichtet sind, bewegbar sind.

8. Kupplung nach Anspruch 7, wobei die erste Kupplungshälfte (12) und die zweite Kupplungshälfte (12) in der verbundenen Position in einem anderen Winkel als 180 Grad zueinander ausgerichtet sind.

9. Kupplung nach Anspruch 8, wobei die erste Kupplungshälfte (12) und die zweite Kupplungshälfte (12) in eine gelöste Position bewegbar sind, in der das schmale Auflager (54) der zweiten Kupplungshälfte (12) durch den Schlitz (58) der ersten Kupplungshälfte (12) und das schmale Auflager (54) der ersten Kupplungshälfte (12) durch den zweiten Schlitz (58) der zweiten Kupplungshälfte (12) hindurchgehen kann.

10. Kupplung nach Anspruch 9, wobei die erste Kupplungshälfte (12) und die zweite Kupplungshälfte (12) in der gelösten Position in einem Winkel von etwa 180 Grad zueinander ausgerichtet sind.

11. Kupplung nach Anspruch 8, wobei die ersten und zweiten abgeschrägten Auflager (22, 34) der verschiedenen Kupplungshälften (12) in der verbundenen Position weniger als 1,5 mm (0,06 Inch) voneinander entfernt liegen.

## Revendications

1. Accouplement (10) par têtes d'accouplement, comprenant :
une première moitié (12) d'accouplement ayant une face (16) avec une ouverture (18) à travers celle-ci ;
un tenon de verrouillage (20) s'étendant vers l'extérieur depuis la face (16) de ladite première moitié (12) d'accouplement et ayant un premier tampon incliné (22) positionné en un emplacement prédéterminé autour de la face (16) et une crête (46) s'étendant vers l'extérieur depuis celui-ci ;
**caractérisé en ce que** la première moitié (12) d'accouplement comprend en outre :
un rebord (28) s'étendant depuis la face (16) et ayant un deuxième tampon incliné (34) positionné de façon opposée autour de la face (16) par rapport au premier tampon incliné (22), ledit deuxième tampon incliné (34) étant formé pour définir un tampon étroit (54),
dans lequel ledit tenon de verrouillage (20) inclut en outre un troisième tampon incliné (56) espacé du premier tampon incliné (22) pour définir une fente (58) entre ceux-ci.

2. Accouplement selon la revendication 1, dans lequel le rebord (28) inclut une patte (40) définissant un canal (32) au-dessus du deuxième tampon incliné (34).

3. Accouplement selon la revendication 2, dans lequel le canal (32) est dimensionné pour recevoir un tenon de verrouillage (20) d'une deuxième moitié (12) d'accouplement.

4. Accouplement selon la revendication 3, dans lequel le premier tampon incliné (22) comprend une partie conique (24) et une partie inclinée (26).

5. Accouplement selon la revendication 4, dans lequel le deuxième tampon incliné (34) comprend une deuxième partie conique (36) et une deuxième partie inclinée (38).

6. Accouplement selon la revendication 5, comprenant en outre :
une deuxième moitié (12) d'accouplement ayant une deuxième face (16) avec une deuxième ouverture (18) à travers celle-ci ;
un deuxième tenon de verrouillage (20) s'étendant vers l'extérieur depuis la deuxième face (16) de ladite deuxième moitié (12) d'accouplement et ayant un premier tampon incliné (22) positionné en un emplacement prédéterminé autour de la deuxième face (16) et une deuxième crête s'étendant depuis celui-ci ;
un deuxième rebord (28) s'étendant depuis la deuxième face (16) et ayant un deuxième tampon incliné (34) positionné de façon opposée autour de la deuxième face (16) par rapport au premier tampon incliné (22), ledit deuxième tampon incliné (34) étant formé pour définir un tampon étroit (54), ledit deuxième tenon de verrouillage (20) inclut en outre un troisième tampon incliné (56) espacé du premier tampon incliné (22) pour définir une deuxième fente (58) entre ceux-ci qui peut accepter le tampon étroit (54) de la première moitié (12) d'accouplement.

7. Accouplement selon la revendication 6, dans lequel la première moitié (12) d'accouplement et la deuxième moitié (12) d'accouplement sont mobiles entre une position déconnectée, dans laquelle les premier et deuxième tampons inclinés (22, 34) sont désalignés, respectivement, et une position connectée, dans laquelle les premier et deuxième tampons inclinés (22, 34) sont alignés, respectivement.

8. Accouplement selon la revendication 7, dans lequel la première moitié (12) d'accouplement et la deuxième moitié (12) d'accouplement sont orientées différemment de 180 degrés l'une par rapport à l'autre lorsqu'elles sont dans la position connectée.

9. Accouplement selon la revendication 8, dans lequel la première moitié (12) d'accouplement et la deuxième moitié (12) d'accouplement sont mobiles jusqu'à une position libérée où le tampon étroit (54) de la deuxième moitié (12) d'accouplement peut passer à travers la fente (58) de la première moitié (12) d'accouplement et le tampon étroit (54) de la première moitié (12) d'accouplement peut passer à travers la deuxième fente (58) de la deuxième moitié (12) d'accouplement.

10. Accouplement selon la revendication 9, dans lequel la première moitié (12) d'accouplement et la deuxième moitié (12) d'accouplement sont orientées à environ 180 degrés dans la position libérée.

11. Accouplement selon la revendication 8, dans lequel les premier et deuxième tampons inclinés (22, 34) de différentes moitiés (12) d'accouplement sont espacés de moins de 1,5 mm (0,06 pouce) lorsque l'accouplement est dans la position connectée.
